# EUROPEAN PATENT SPECIFICATION

(11) **EP 1 568 271 B1**
(45) Date of publication and mention of the grant of the patent: **25.06.2008**
(21) Application number: 05101229.2
(22) Date of filing: 18.02.2005
(51) Int. Cl.: A01G 25/02

(54) **Line-end dripper for watering system**
Tropfbewässerungsauslass für die Rohrenden eines Bewässerungssystems
Goutteur de fin de ligne pour système d'arrosage

(30) Priority: 24.02.2004 IT MI20040070 U
(43) Date of publication of application: 31.08.2005
(73) Proprietor: CLABER S.P.A., 33080 Fiume Veneto (PN) (IT)
(72) Inventor: Roman, Gianfranco, 33087 PASIANO (PN) (IT)
(74) Representative: Mittler, Enrico

(56) References cited:
- AU-A- 4 305 672
- US-A- 3 815 636
- US-A- 4 177 947

## Description

The present invention concerns a line-end dripper for watering system.

Drippers are valid instruments to supply small amounts of liquid in a continuous way to plants or flowers.

In terraces of many apartments, for example, several boxes with plants or flowers are arranged which, especially during the summer, need periodic watering.

For small kitchen gardens and/or flower-beds too the use of traditional watering systems would be excessive.

There are known line and line-end drippers connected with hoses for the supplying of water, which after a certain period of use lose in efficiency because of the limestone or impurities which block the flow of water in the drippers.

Usually the dripper is made up of a hollow external cylindrical casing provided with traditional female internal thread with triangular teeth, and of an internal body with traditional male external thread with triangular teeth which screws in the aforesaid female internal thread.

The external casing has an opening at one end for the inlet of the liquid and an opening in intermediate position between the two ends for the outflow of the liquid in the form of drops.

When the dripper is in open position the liquid flows through the interstice present between the threads.

The slack between said threads is minimum so that, also because of the limited turbulence of the flow, possible impurity tend to deposit thus compromising the correct operation of the dripper, with an efficiency which decreases with time. In such case the dripper must therefore be cleaned or even replaced very frequently.

US-A-4 177 947 discloses an irrigation device with variable flow control according to the preamble of claim 1.

Scope of the present invention is to provide a line-end dripper in which the impurity and limestone deposit is limited through time, thus increasing the life of the dripper.

According to the invention such scope is attained with a line-end dripper for watering system, as recited in claim 1.

The characteristics and the advantages of the present invention will become evident from the following detailed description of an embodiment thereof which is illustrated as a non limiting example in the enclosed drawings, in which:

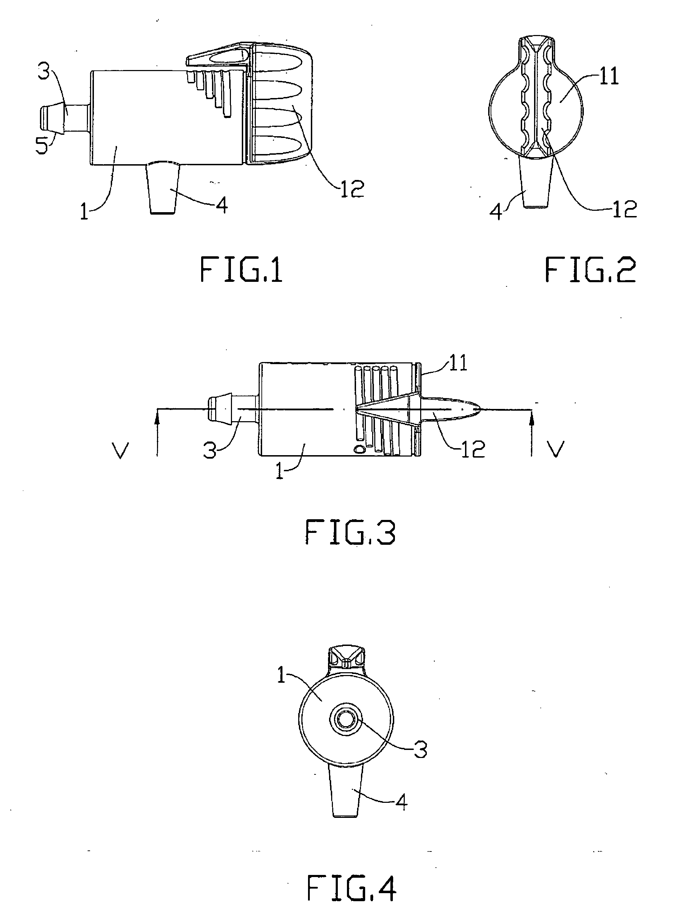

Figure 1 shows a side view of the dripper according to the present invention;
Figure 2 shows a back view of the dripper;
Figure 3 shows a top plan view of the dripper;
Figure 4 shows a front view of the dripper;
Figure 5 shows a view in section according to the line V-V in Figure 3 with the dripper in closed position;
Figure 6 shows a section view similar to Figure 5 but with the dripper in open position;

The line-end dripper shown in the drawings comprises a hollow external cylindrical casing 1 and an internal body 2.

The external casing 1 has an opening 3 for the inlet of the liquid at one end and an opening 4 for the outflow of the same liquid under the form of drops in intermediate position between the two ends. The inlet 3 has an external surface 5 with slightly conical shape in order to allow the coupling of the hose for the supply of the water.

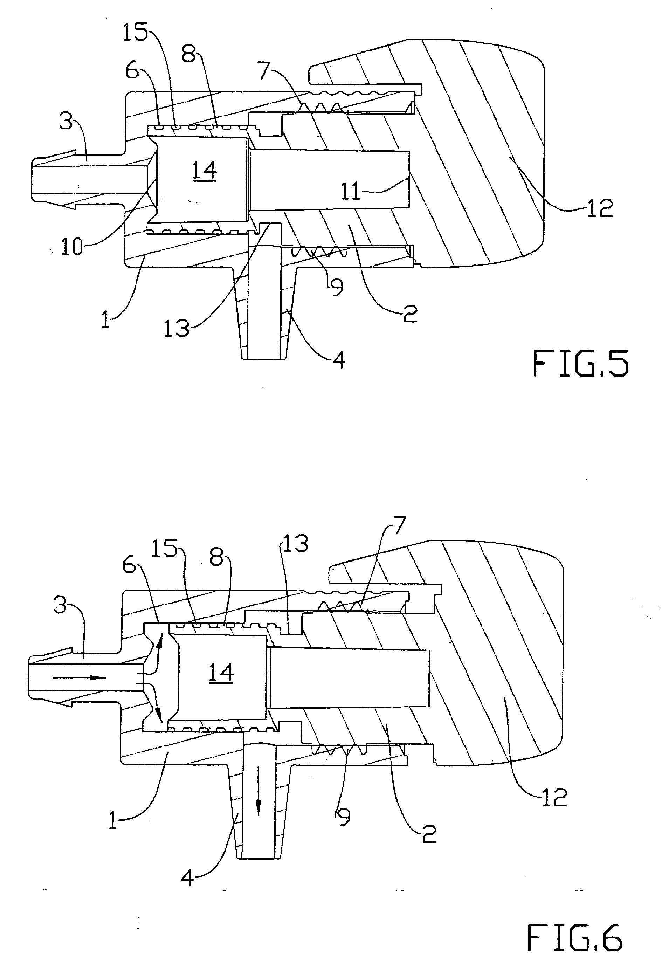

In Figure 5 it can be noted that the casing 1 has internally a smooth wall 6 and a wall with female thread 7 with triangular section, being the diameter of the transversal section of the wall 6 smaller than the one of the wall with thread 7.

The internal body 2 has an internal cavity 14 and it has on its external surface a first trapezoidal thread 8 separated by means of an intermediate throat 13 from a second male thread 9 with triangular section which screws into the corresponding female thread 7 of the external casing 1.

With the internal body 2 screwed in the casing 1, between the trapezoidal thread 8 and the smooth wall 6 an interstice 15 is created for the flow of the liquid.

The same internal body 2 has an open end 10 and a closed end 11 which ends with a handle 12 for the screwing/unscrewing of the internal body 2 in the external casing 1.

As regards the operation of the dripper, the liquid enters from the inlet 3 and it invades the cavity 14. If the dripper is in closed position (Figure 5), that is the internal body 2 has completely been screwed in such a way as to prevent the communication between the cavity 14 and the interstice 15, there is no spillage of drops from the opening 4.

If viceversa through the handle 12 the internal body 2 is slightly unscrewed, the liquid invades the interstice 15 and it reaches the throat 13 first and then the outlet 4 (Figure 6).

Obviously, the more the body 2 is unscrewed, the greater is the quantity of liquid in outflow from the dripper.

The coupling between the trapezoidal thread 8 and the smooth wall 6 is such that the liquid has a fairly large space to outflow. The greater capacity of the flow of liquid involves as a consequence a lower risk of incrustation and deposit of impurities which can compromise the correct operation of the dripper. The duration of the latter is thus increased.

## Claims

1. Line-end dripper for watering system, comprising a hollow external casing (1) with two openings for the inlet (3) and the outlet (4) of water, and an internal body (2) screwable in said casing (1) for its movement between a position of closing of the communication between said openings (3, 4) and a position of variable opening of said communication, in which said communication is established by an interstice (15) between a portion of said external casing (1) and a portion of said internal body (2), wherein said portion of the external casing (1) is provided with a smooth cylindrical internal wall (6) and said portion of the internal body (2) is provided with an external wall with a thread (8) of substantially trapezoidal section, **characterised in that** said internal body (2) has an open cavity (14) which is internally cylindrical with a transversal section of variable diameter, said external casing (1) has said internal wall (6) of smooth cylindrical shape and further comprises a female thread (7) for the rotation of the internal body (2), said internal body (2) has a male thread (9) which engages with said female thread (7) of the external casing (1) for the rotation of the internal body (2) in said external casing (1), and said substantially trapezoidal thread (8) and said screwing thread (9) are separated by an intermediate throat (13).

2. Dripper according to claim 1, **characterised in that** said opening (3) for the inlet of the liquid is at one end of the external casing (1) and the opening (4) for the outlet of the liquid in drops is at an intermediate position between the two ends of the external casing (1).

3. Dripper according to claim 1, **characterised in that** said internal body (2) has a closed end (11) having a handle (12) for the screwing/unscrewing of the internal body (2) in the external casing (1).

## Patentansprüche

1. Leitungsenden-Tropfer für ein Bewässerungssystem, aufweisend ein hohles Außengehäuse (1) mit zwei Öffnungen für den Eintritt (3) und den Austritt (4) von Wasser, sowie einen Innenkörper (2), der in dem Gehäuse (1) schraubar ist für eine Bewegung zwischen einer Position, in der die Verbindung zwischen den beiden Öffnungen (3, 4) geschlossen ist, und einer Position mit variabler Öffnung der Verbindung, in der die Verbindung durch einen Raum (15) zwischen einem Bereich des Außengehäuses (1) und einem Bereich des Innenkörpers (2) hergestellt ist, wobei der Bereich des Außengehäuses (1) mit einer glatten zylindrischen Innenwand (6) versehen ist und der Bereich des Innenkörpers (2) mit einer Außenwand mit einem Gewinde (8) mit im Schnitt im Wesentlichen trapezförmiger Ausbildung versehen ist,
**dadurch gekennzeichnet,**
**dass** der Innenkörper (2) einen offenen Hohlraum (14) aufweist, der innen zylindrisch ist und einen im Querschnitt variablen Durchmesser aufweist,
**dass** das Außengehäuse (1) die Innenwand (6) mit glatter zylindrischer Formgebung aufweist und ferner ein Innengewinde (7) für die rotationsmäßige Bewegung des Innenkörpers (2) aufweist,
**dass** der Innenkörper (2) ein Außengewinde (9) aufweist, das mit dem Innengewinde (7) des Außengehäuses (1) für die rotationsmäßige Bewegung des Innenkörpers (2) in dem Außengehäuse (1) in Eingriff steht, und
**dass** das im Wesentlichen trapezförmige Gewinde (8) und das Schraubgewinde (9) durch eine Passage (13) voneinander getrennt sind.

2. Tropfer nach Anspruch 1,
**dadurch gekennzeichnet, dass** die Öffnung (3) für den Eintritt der Flüssigkeit sich an dem einen Ende des Außengehäuses (1) befindet und die Öffnung (4) für den Austritt der Flüssigkeit in Form von Tropfen sich an einer zwischengeordneten Stelle zwischen den beiden Enden des Außengehäuses (1) befindet.

3. Tropfer nach Anspruch 1,
**dadurch gekennzeichnet, dass** der Innenkörper (2) ein geschlossenes Ende (11) mit einer Handhabe (12) zum Hineinschrauben/Herausschrauben des Innenkörpers (2) in das bzw. aus dem Außengehäuse (1) aufweist.

## Revendications

1. Goutteur de fin de ligne pour système d'arrosage, comprenant un boîtier extérieur creux (1) avec deux ouvertures pour l'entrée (3) et la sortie (4) d'eau, et un corps interne (2) à visser dans ledit boîtier (1) pour son mouvement entre une position de fermeture de la communication entre lesdites ouvertures (3, 4) et une position d'ouverture variable de ladite communication, dans lequel ladite communication est établie par une interstice (15) entre une portion dudit boîtier externe (1) et une portion dudit boîtier interne (2), dans lequel ladite portion du boîtier externe (1) est dotée d'une paroi interne cylindrique lisse (6) et ladite portion du corps interne (2) est dotée d'une paroi externe avec un pas de vis (8) de section sensiblement trapézoïdale,
**caractérisé en ce que** ledit corps interne (2) présente une cavité ouverte (14) qui est cylindrique à l'intérieur avec une section transversale de diamètre variable, ledit boîtier externe (1) présente ladite paroi interne (6) de forme cylindrique et comprend encore un pas de vis femelle (7) pour la rotation du corps interne (2), ledit corps interne (2) comporte un pas de vis mâle (9) qui est en engagement avec ledit pas de vis femelle (7) du boîtier externe (1) pour la rotation du corps interne (2) dans ledit boîtier externe (1), et ledit pas de vis sensiblement trapézoïdal (8) et ledit pas de vis mâle (9) sont séparés par une gorge intermédiaire (13).

2. Goutteur selon la revendication 1, **caractérisé en ce que** ladite ouverture (3) pour l'entrée de liquide est à une extrémité du boîtier externe (1), et l'ouverture (4) pour la sortie du liquide en gouttes est à une position intermédiaire entre les deux extrémités du boîtier externe (1).

3. Goutteur selon la revendication 1, **caractérisé en ce que** ledit corps interne (2) a une extrémité fermée (11) ayant une poignée (12) pour le vissage/dévissage du corps interne (2) dans le boîtier externe (1).
